# EUROPÄISCHE PATENTSCHRIFT

(11) **EP 4 116 571 B1**
(45) Veröffentlichungstag und Bekanntmachung des Hinweises auf die Patenterteilung: **06.03.2024**
(21) Anmeldenummer: 21184856.9
(22) Anmeldetag: 09.07.2021
(51) Int. Cl.: F03B 17/06, F03D 1/04, F03D 13/20

(54) **ENERGIEUMWANDLUNGSVORRICHTUNG UND ENERGIEUMWANDLUNGSANORDNUNG**
ENERGY CONVERSION APPARATUS AND ENERGY CONVERSION DEVICE
DISPOSITIF DE CONVERSION D'ÉNERGIE ET AGENCEMENT DE CONVERSION D'ÉNERGIE

(43) Veröffentlichungstag der Anmeldung: 11.01.2023
(73) Patentinhaber: Immig, Mario, 55543 Bad Kreuznach (DE)
(72) Erfinder: Immig, Mario, 55543 Bad Kreuznach (DE)
(74) Vertreter: Metten, Karl-Heinz

(56) Entgegenhaltungen:
- DE-A1-102006 006 260
- DE-A1-102007 057 267
- DE-U1-202010 006 722
- FR-A- 1 011 132
- GB-A- 2 001 396
- JP-A- S58 178 881
- US-A- 1 345 022
- US-A- 4 616 974
- US-A1- 2011 194 927
- US-A1- 2017 082 086
- US-A1- 2019 234 369

## Beschreibung

Die Erfindung betrifft eine Energieumwandlungsvorrichtung zum Umwandeln von Wasserenergie in elektrische Energie. Ferner betrifft die Erfindung eine Energieumwandlungsanordnung mit mehreren Energieumwandlungsvorrichtungen.

Diverse Wasserkraftanlagen sind aus dem Stand der Technik bekannt.

Die DE 10 2006 006 260 A1 betrifft eine kompakte und handhabbare Vorrichtung zur Erzeugung elektrischer Energie. Eine solche Vorrichtung soll sich zum mobilen Betrieb auf Segelbooten, zum transportablen/quasi stationären Betrieb beim Camping oder Trekking und/oder zum stationären Betrieb auf Hütten oder in Ferienanlagen eignen.

Die DE 10 2007 057 267 A1 stellt auf eine Einrichtung zur regenerativen Erzeugung von elektrischer Energie aus Windenergie über offenem Wasser eines Ozeanes, Meeres oder Binnengewässers ab. Die erzeugte elektrische Energie soll bei Elektrolyseanlagen zur Erzeugung von Wasserstoff und Sauerstoff und/oder für eine Methanol- bzw. Ammoniaksyntheseanlage genutzt werden.

Die GB 2 001 396 A zeigt eine Vorrichtung zur Umwandlung von Gezeitenenergie. Mit einer solchen Vorrichtung soll sich elektrische Energie aus der Gezeitenbewegung von Wasser gewinnen lassen.

Die US 2017/082086A1 stellt ebenfalls auf ein Gerät zur Stromerzeugung aus einer Gezeiten- oder Meeresströmung ab. Ein solches Gerät soll einfacher herzustellen, zu installieren, zu betreiben und zu reparieren sein als herkömmliche Geräte zur Stromerzeugung aus einer Gezeiten- oder Meeresströmung.

Die DE 20 2010 006 722 U1 zeigt trichterförmige Vorrichtungen. Solche Vorrichtungen sollen die Austrittsgeschwindigkeit beim bzw. nach Austritt von Strömungen aus den Trichtern erhöhen.

Die US 2011/194927 A1 stellt auf ein kleines Wasserkraftwerk ab, das zur Erzeugung von elektrischer Energie mit einer Leistung von z. B. hundert Kilowatt aus einem Bach oder Fluss verwendet werden soll, in dem die verfügbare hydraulische Höhe zwischen einem und acht Metern liegt. Eine solches System soll ein wirtschaftliches und störungsfreies Wasserkraftwerk auf Siphonbasis zugänglich machen.

Die JP S58 178881 A stellt auf ein Wellenenergieumwandlungsgerät ab. Mit einem solchen Gerät soll sich Wellenenergie in Luftenergie und sodann in elektrische Energie umwandeln lassen.

Die US 2019/234369 A1 zielt auf ein System zur Erzeugung von Meeresströmungsenergie ab. Ein solches System soll keine Unterwasserturbinengeneratoren verwenden, mit geringen Kosten gebaut werden können und geringe Wartungskosten erfordern. Ferner soll ein solches System geringe Auswirkungen auf die Fischerei haben und keine Magnetfeldstörungen bei Meereslebewesen erzeugen.

Bislang gibt es keine Wasserkraftanlagen, die mit geringem Aufwand starke Strömungen und/oder hohen Wellengang zur Stromerzeugung nutzbar machen können. Insbesondere werden steile Felswände am Meer, gegen die hohe Wellen schlagen, nicht als zur Stromerzeugung geeigneten Standort in Betracht gezogen.

Der vorliegenden Erfindung lag die Aufgabe zugrunde, eine Energieumwandlungsvorrichtung zum Umwandeln von Wasserenergie in elektrische Energie bereitzustellen, die nicht mehr mit den Nachteilen des Stands der Technik behaftet ist. Insbesondere lag der Erfindung die Aufgabe zugrunde, eine Energieumwandlungsvorrichtung bereitzustellen, die eine besonders effiziente Umwandlung von Wasserenergie gewährleistet. Vorzugsweise liegt der Erfindung die Aufgabe zugrunde, eine Energieumwandlungsvorrichtung bereit zu stellen, die sich besonders zur Gewinnung elektrischer Energie aus starken Strömungen und/oder hohem Wellengang eignet. Alternativ oder zusätzlich lag der Erfindung die Aufgabe zugrunde, eine Energieumwandlungsvorrichtung bereitzustellen, die ortsunabhängig ist und/oder an einem beliebigen Montageort eingesetzt werden kann. Insbesondere lag der Erfindung die Aufgabe zugrunde, eine Energieumwandlungsvorrichtung beliebiger Größe bereit zu stellen. Eine andere oder zusätzliche Aufgabe lag darin, eine Energieumwandlungsvorrichtung bereitzustellen, die für jedermann, insbesondere Laien, ungeschulte Anwender und Privatanwender, ohne weiteres realisierbar ist. Weiterhin lag eine Aufgabe insbesondere darin, ein besonders umweltfreundlich herstellbares und/oder zu betreibendes Energieumwandlungssystem bereitzustellen.

Demnach ist eine Energieumwandlungsvorrichtung zum Umwandeln von Wasserenergie in elektrische Energie vorgesehen, die mindestens einen Rotor und ein Strömungsgehäuse umfasst. Insbesondere ist die Energieumwandlungsvorrichtung zum Umwandeln von Wasserenergie von Wellen in elektrische Energie vorgesehen. Alternativ oder zusätzlich kann die Energieumwandlungsvorrichtung zum Umwandeln von Wasserenergie einer Strömung, wie einer Meeresströmung, in elektrische Energie vorgesehen sein. Im Unterschied zu herkömmlichen Offshore-Windenergieanlagen wird mit der erfindungsgemäßen Energieumwandlungsvorrichtung eine ständige Energiegewinnung rund um die Uhr, ermöglicht. Anders als mitunter ruhender, oder für konventionelle Windenergieanlagen zu schnell wehender Wind, stehen Wellengang und Wasserströmungen, insbesondere Meeresströmungen, wetterunabhängig stets zur Verfügung.

Der mindestens eine Rotor hat eine Rotordrehachse, deren Ausrichtung durch ein Traggestell festgelegt ist. Vorzugsweise ist der Rotor an dem Traggestell durch eine mechanische Verbindung festgelegt. Die Festlegung des Rotors legt die Ausrichtung der Rotordrehachse fest. Es sei klar, dass der Rotor drehbar ist, die Festlegung des Rotors beispielsweise an dem Traggestell die grundsätzliche Funktionstüchtigkeit des Rotors unterstützt und nicht beeinträchtigt. Zur Festlegung des Rotors an dem Traggestell können bekannte mechanische Vorrichtungen, wie Radiallager, Axiallager und/oder Gleitlager vorgesehen sein. Der mindestens eine Rotor kann mehrere sich radial zur Rotordrehachse erstreckende Rotorblätter umfassen. Bevorzugt ist der Rotor dazu ausgelegt und eingerichtet, Strom beziehungsweise elektrische Energie als sogenannte "blaue Energie" aus der unerschöpflichen Energiequelle in Form des Wassers im Meer oder anderen bewegten Gewässern mit Hilfe des Widerstandsprinzips nutzbar zu machen. Es sei klar, dass der Begriff Rotor in der vorliegenden Offenbarung Laufräder und/oder Turbinen und dergleichen umfasst, die dazu ausgelegt und eingerichtet sind, Wasserenergie zu erfassen und in eine Drehbewegung zur Umwandlung in elektrische Energie insbesondere mittels eines Generators zu überführen.

Das Strömungsgehäuse umfasst einen Rotormantel, der den Rotor radial zu der Rotordrehachse umgibt. Vorzugsweise umgibt der Rotormantel den Rotor vollumfänglich. Der Rotormantel ist vorzugsweise rohrförmig. Insbesondere umgibt der Rotormantel die durch die Rotorblätter des Rotors aufgespannte Fläche vollständig, vorzugsweise berührungsfrei. Das Strömungsgehäuse ist vorzugsweise dazu ausgelegt und eingerichtet, das sich im Strömungsgehäuse bewegende Wasser zum Antreiben des Rotors insbesondere gemäß dem Widerstandsprinzip zu führen.

Das Strömungsgehäuse umfasst ferner eine dem Rotormantel vorgelagerte Fangeinrichtung, die dazu ausgelegt und eingerichtet ist, eine Wasserbewegung zum Rotor zu führen. Vorzugsweise ist die Fangeinrichtung in Bezug auf den Rotormantel ortsfest. Der Rotormantel und die Fangeinrichtung können einstückig gebildet sein. Die Fangeinrichtung kann beispielsweise trichterartig sein. Mithilfe des Rotormantels und der Fangeinrichtung kann eine Zwangsdurchströmung der Rotorfläche erreicht werden. Indem die Wasserbewegung zum Rotor geführt wird, kann eine besonders hohe Ausbeute der Energieumwandlungseinrichtung erreicht werden.

Bei einer Weiterbildung der Erfindung dehnt sich die Fangeinrichtung kanalartig, insbesondere zylinder- oder quaderförmig, von dem Rotormantel aus. Alternativ oder zusätzlich weist die Fangeinrichtung einen runden, insbesondere kreisförmigen oder elliptischen, Querschnitt oder eckigen, insbesondere vieleckigen, vorzugsweise quadratischen, Querschnitt auf. Die Querschnittsform und/ oder Kanalerstreckung der Fangeinrichtung ist vorzugsweise angepasst an die örtlichen Gegebenheiten der Energieumwandlungsvorrichtung. Insbesondere kann die Querschnittsform und/ oder Kanalerstreckung dazu ausgelegt und eingerichtet sein, Wasser von einer vorherrschenden Bewegungsrichtung zur Ausrichtung der Rotordrehachse zu führen und/ oder umzulenken. Beispielsweise kann die Rotordrehachse vertikal ausgerichtet sein und die kanalartige Fangeinrichtung sich vom Rotormantel schräg erstrecken, um eine Oberflächen-Wellenbewegung hin zum Rotor zu führen.

Bei der erfindungsgemäßen Energieumwandlungsvorrichtung mit Fangeinrichtung ist an dem Rotormantel zugewandten Ende der Fangeinrichtung mindestens eine, insbesondere trichterförmige, vorzugsweise kontinuierliche oder stufenförmige, Querschnittsverjüngung angeordnet. Eine stufenförmige Querschnittsverjüngung kann besonders einfach und damit kostengünstig herstellbar sein. Eine kontinuierliche (stufenfreie) Querschnittsverjüngung kann vorgesehen sein, um eine stetige Umlenkung einer Strömung zu bewirken. Die Querschnittsverjüngung ist vorzugsweise in Bezug auf den Rotormantel und/oder die Fangeinrichtung ortsfest. Die Querschnittsverjüngung weist einen Einlassquerschnitt und einen Auslassquerschnitt auf. Der Einlassquerschnitt und der Auslassquerschnitt weisen vorzugsweise dieselbe Querschnittsform auf. Der Einlassquerschnitt ist größer als der Auslassquerschnitt. Vorzugsweise ist eine Diagonalerstreckung des Einlassquerschnitts 1,1 bis 10 mal, insbesondere 1,5 bis 5 mal, vorzugsweise etwa 2 mal so groß wie eine Diagonalerstreckung des Auslassquerschnitts. Die Querschnittsverjüngung umfasst insbesondere eine durch die Fangeinrichtung gebildete Einströmöffnung, die größer ist als die Querschnittsfläche des Rotormantels. Durch die Querschnittsverjüngung kann die Geschwindigkeit des Wassers und gegebenenfalls der Luft im Bereich des Rotors gegenüber der Geschwindigkeit in der Umgebung der Energieumwandlungsvorrichtung deutlich erhöht sein, insbesondere um wenigstens 20 %, vorzugsweise um wenigstens 40 %, besonders bevorzugt um wenigstens 60 %. Durch die Erhöhung der Wassergeschwindigkeit kann mit der erfindungsgemäßen Energieumwandlungseinheit ein besonders hoher Ertrag erreicht werden.

Die Fangeinrichtung der erfindungsgemäßen Energieumwandlungsvorrichtung umfasst mindestens einen Krümmer. Insbesondere hat der Krümmer eine innere Krümmerwand und eine äußere Krümmerwand. Die innere Krümmerwand ist kürzer als die äußere Krümmerwand. Insbesondere weist die innere Krümmerwand einen abgerundeten oder kantigen Verlauf auf. Alternativ oder zusätzlich weist die äußere Krümmerwand einen abgerundeten oder kantigen Verlauf auf. Der Krümmer ist vorzugsweise dazu ausgelegt und eingerichtet, eine Wasserströmung aus einer ersten Bewegungsrichtung am Eingang des Krümmers in eine zweite Bewegungsrichtung umzulenken. Vorzugsweise bewirkt der Krümmer eine Umlenkung der ersten Bewegungsrichtung im Bereich 30° bis 180°, insbesondere im Bereich 45° bis 135°, vorzugsweise im Bereich 70° bis 110°, Besonders bevorzugt im Bereich 90° ± 10°. Beispielsweise kann mit dem Krümmer eine im Wesentlichen horizontale Strömungsbewegung in eine im Wesentlichen vertikale Strömungsbewegung umgewandelt werden. Es kann bevorzugt sein, dass die Fangeinrichtung einen Krümmer und eine Querschnittsverjüngung umfasst. Insbesondere kann ein Übergang vom Krümmer zur Querschnittsverjüngung kontinuierlich sein. Der Krümmer und die Querschnittsverjüngung haben vorzugsweise die gleiche, beispielsweise runde, insbesondere ovale oder kreisförmige, oder eckige, insbesondere rechteckige oder polygonale, Querschnittsform. Der Krümmer und die Querschnittsverjüngung können in Funktionsunion ausgeführt sein, d.h. zumindest abschnittsweise kann die Fangeinrichtung durch einen Krümmer mit integrierter Querschnittsverjüngung gebildet sein. Die Querschnittsverjüngung kann durch schräg zu einander ausgerichtete innere und äußere Krümmerwände gebildet sein. Der

Krümmer ist der Querschnittsverjüngung in Bezug auf die Bewegungsrichtung des Wassers vorgelagert. Die innere und die äußere Krümmerwand können raumparallel zu einander ausgerichtet sein. Mithilfe einer Fangeinrichtung, die mit einem Krümmer und/oder einer Querschnittsverjüngung ausgestattet ist, kann eine Energieumwandlungsvorrichtung mit hohem Ertrag bei besonders kompakter Bauweise realisiert werden. Der geringe Materialbedarf bei Herstellung, sowie geringe Herstellungs- und Instandhaltungskosten der erfindungsgemäßen Energieumwandlungsvorrichtung dienen vorteilhafterweise ferner dem Ressourcenschutz, beispielsweise kann auf die Verwendung seltener Metalle verzichtet werden.

Bei einer Ausführungsform umfasst eine erfindungsgemäße Energieumwandlungsvorrichtung eine Lagerung, an der das Traggestell quer, insbesondere orthogonal, und/ oder parallel zur Richtung der Rotordrehachse beweglich gehalten ist. Am Traggestell ist der Rotor festgelegt. Insbesondere ist die Lagerung eine Schienenlagerung. Das Traggestell legt den Rotor und damit die Ausrichtung der Rotordrehachse fest. Mithilfe der Lagerung kann das Traggestell beispielsweise vertikal beweglich sein, um die Ausrichtung der Rotordrehachse auf einem vorherrschenden Wasserstand, insbesondere Tidenhöhe, anzupassen. Dabei kann die Orientierung der Rotordrehachse konstant bleiben und mithilfe der Lagerung eine vorzugsweise ausschließlich translatorische Beweglichkeit in Vertikalrichtung und/oder Horizontalrichtung bereitgestellt sein. Eine solche Energieumwandlungsvorrichtung kann beispielsweise an Felsen, insbesondere steilen Felswänden, und/oder in Strandnähe eingesetzt werden. Grundsätzlich ist es denkbar, die erfindungsgemäße Energieumwandlungsvorrichtung an jedem beliebigen Ort beispielsweise an Land anzubringen beziehungsweise aufzustellen.

Bei einer anderen Ausführungsform einer Energieumwandlungsvorrichtung, die mit den vorigen kombinierbar ist, ist der Rotor in Vertikalrichtung und/oder in Horizontalrichtung, vorzugsweise quer, insbesondere orthogonal, oder parallel zur Rotordrehachse, insbesondere zwischen mindestens zwei Rotorstellungen mit parallelen Drehachsen-Ausrichtungen und/oder relativ zum Traggestell, verlagerbar. Der Rotor kann beispielsweise relativ zum Traggestell verlagerbar sein, um ihn einerseits in eine Betriebsposition in Kontakt mit dem Wasser und andererseits eine Ruhe- und/oder Wartungsposition außerhalb des Wassers zu bringen. Erfindungsgemäß ist der Rotor verlagerbar, um eine Anpassung an die vorherrschende Strömung und/ oder den vorherrschenden Wasserstand zu gewährleisten.

Alternativ oder zusätzlich ist bei einer Ausführungsform einer Energieumwandlungsvorrichtung der Rotor quer zur Rotordrehachse schwenkbeweglich, vorzugsweise um eine insbesondere vertikale Schwenkachse und/oder eine insbesondere horizontale Kippachse. Der Rotor kann um mehrere Achsen schwenkbeweglich sein, beispielsweise um eine Schwenkachse und eine dazu orthogonale Kippachse. Die Schwenkachse und/oder die Kippachse sind in Bezug auf die Rotordrehachse quer, vorzugsweise orthogonal, ausgerichtet. Insbesondere ist der Rotor schwenkbar zwischen mindestens zwei Rotororientierungen, insbesondere relativ zum Traggestell, beispielsweise um etwa 45° oder etwa 80°. Insbesondere ist der Rotor um die Schwenkachse und/oder um die Kippachse drehbar um wenigstens 15°, insbesondere wenigstens 45°, vorzugsweise wenigstens 60°, und/oder um nicht mehr als 360°, insbesondere nicht mehr als 180°, vorzugsweise nicht mehr als 120°. Eine Rotororientierung ist anhand der Winkel-Ausrichtung der Rotordrehachse bestimmbar. Beispielsweise kann die Rotororientierung um eine im Wesentlichen vertikale Schwenkachse verschwenkt werden, um an vorherrschende Strömungsbedingungen, beispielsweise an einem Strand, anpassbar zu sein. Alternativ oder zusätzlich kann die Rotororientierung um eine im Wesentlichen horizontale Kippachse verschwenkt werden, um an einen vorherrschenden Wasserstand, beispielsweise eine Tidenhöhe, anpassbar zu sein.

Gemäß einer bevorzugten Weiterbildung der Erfindung umfasst die Energieumwandlungsvorrichtung eine Stellvorrichtung, die zum Einstellen der Rotorstellung und/oder der Rotororientierung ausgelegt und eingerichtet ist. Insbesondere ist die Stellvorrichtung mechanisch, pneumatisch, hydraulisch und/oder manuell.

Bei einer besonders bevorzugten Ausführungsform einer erfindungsgemäßen Energieumwandlungsvorrichtung ist die Rotordrehachse in Horizontalrichtung ausgerichtet. Insbesondere kann die Ausrichtung der Rotordrehachse konstant in Horizontalrichtung ausgerichtet sein. Die Ausrichtung der Rotordrehachse kann auf eine einzige bestimmte Horizontalrichtung festgelegt sein. Alternativ kann eine Beweglichkeit der Rotordrehachse bei konstant horizontaler Ausrichtung vorgesehen sein. Beispielsweise kann die Rotordrehachse translatorisch mit konstant horizontaler Ausrichtung beweglich sein. Alternativ oder zusätzlich kann die Rotordrehachse bei konstant horizontaler Ausrichtung, insbesondere um eine vertikale Schwenkachse, schwenkbeweglich sein.

Gemäß einer anderen besonders bevorzugten Ausführungsform einer Energieumwandlungsvorrichtung ist die Rotordrehachse in Vertikalrichtung ausgerichtet. Insbesondere ist die Energieumwandlungsvorrichtung zum Umwandeln von Wasserenergie aus einem Wasserfall oder Wellen an einem Steilufer ausgelegt und eingerichtet. Für einen Wasserfall kann die Ausrichtung der Rotordrehachse vertikal aufwärts gerichtet sein. Bei der Verwendung an einem Steilufer kann die Ausrichtung der Rotordrehachse vertikal abwärts gerichtet sein. Insbesondere kann die Ausrichtung der Rotordrehachse konstant in Vertikalrichtung ausgerichtet sein. Die Ausrichtung der Rotordrehachse kann auf eine einzige bestimmte Vertikalrichtung festgelegt sein. Alternativ kann eine Beweglichkeit der Rotordrehachse bei konstant vertikaler Ausrichtung vorgesehen sein. Beispielsweise kann die Rotordrehachse translatorisch mit konstant vertikaler Ausrichtung beweglich sein.

Vorzugsweise kann bei einer Ausführungsform einer Energieumwandlungsvorrichtung das Strömungsgehäuse wenigstens ein Segel umfassen, das zumindest abschnittsweise eine Oberfläche des Strömungsgehäuses, insbesondere der Fangeinrichtung, vorzugsweise einer, insbesondere trichterförmigen, Querschnittsverjüngung und/oder des Rotormantels bildet. Insbesondere kann das Strömungsgehäuse aus einem oder mehreren Segeln gebildet sein. Eine solche Ausführungsform lässt sich besonders kostengünstig umsetzen.

Eine besondere Ausführungsform einer Energieumwandlungsvorrichtung gemäß der Erfindung umfasst einen Schwimmkörper, wie ein Boot, Schiff, Kahn, Ponton, eine Boye, eine Ölbohrplattform oder dergleichen, an dem das Traggestell, an dem der Rotor festgelegt ist, befestigt ist. Insbesondere kann das an dem Schwimmkörper befestigte Traggestell wie das oben beschriebene Traggestell ausgeführt sein.

Gemäß einer anderen besonderen Ausführungsform einer Energieumwandlungsvorrichtung ist das Traggestell vorgesehen, an dem der Rotor festgelegt ist. Das Traggestell ist an einem Fundament am Grund, wie einem Meeresgrund, einem Strandufer, einem Steilufer, einer Felswand oder einem Felsengrund befestigt. Es sei klar, dass diese besondere Ausführungsform mit der vorgenannten Ausführungsform, welche eine Lagerung, insbesondere eine Schienenlagerung, beinhaltet, kombinierbar ist.

Bei einer bevorzugten Ausführungsform der Energieumwandlungsvorrichtung ist das Traggestell der Energieumwandlungsvorrichtung an einer Staumauer, wie einem Stauwerk, einem Stauwehr, einem Wasserkraftwerk oder dergleichen befestigt. An dem Traggestell ist der Rotor festgelegt. Die Energieumwandlungsvorrichtung eignet sich beispielsweise dazu, bestehende Staumauern jeglicher Art aus- oder nachzurüsten.

Gemäß einer Ausführungsform einer Energieumwandlungsvorrichtung, die mit den vorigen kombinierbar ist, sind eine Vielzahl hintereinander angeordneter Rotoren, insbesondere mit koaxialen Rotordrehachsen, insbesondere einer einzigen koaxialen Rotordrehachse, vorgesehen. Alternativ oder zusätzlich kann die Vielzahl hintereinander angeordneter Rotoren mit der gleichen Rotorwelle verbunden sein, insbesondere um denselben oder dieselben Generatoren zum Erzeugen elektrischer Energie anzutreiben. Die Vielzahl von Rotoren kann gleichartig sein oder unterschiedlich sein, beispielsweise verschieden geformte Rotorblätter, unterschiedliche Rotorblatt-Anzahlen, unterschiedliche Rotordurchmesser und dergleichen, aufweisen. Mehrere oder alle der Vielzahl von Rotoren können in demselben Rotormantel untergebracht sein.

Zusätzlich oder alternativ kann eine Ausführungsform einer Energieumwandlungsvorrichtung, die mit den vorigen kombinierbar ist, wenigstens eine, insbesondere hinter dem Rotor angeordnete, Rückhalteeinrichtung umfassen. Die Rückhalteeinrichtung kann beispielsweise als eine einzelne oder mehrere Rückhalteklappe gebildet sein. Die Rückhalteeinrichtung, insbesondere die Rückhalteklappe, ist dazu ausgelegt und eingerichtet, eine Strömung von Wasser in einer ersten Richtung durch das Strömungsgehäuse zu gestatten, und in einer zweiten, zu der ersten Richtung entgegengesetzten zweiten Richtung, zu verhindern. Auf diese Weise kann gewährleistet sein, dass die Anströmung des Rotors durch Wasser ausschließlich in einer einzigen vorbestimmten Bewegungsrichtung erfolgt.

Die Erfindung betrifft auch eine Energieumwandlungsanordnung, die mehrere Energieumwandlungsvorrichtungen umfasst. Gemäß einer bevorzugten Ausführungsform sind die mehreren Energieumwandlungsvorrichtungen zumindest teilweise, insbesondere drehachsenparallel, hintereinander angeordnet. Alternativ oder zusätzlich können die mehreren Energieumwandlungsvorrichtungen zumindest teilweise, insbesondere drehachsenparallel, übereinander und/oder nebeneinander angeordnet sein. Durch die Verwendung mehrere Energieumwandlungsvorrichtungen in Kombination miteinander kann an geeigneten Standorten ein hoher Ertrag elektrische Energie aus Wasserenergie gewonnen werden.

Weitere Merkmale und Vorteile der Erfindung ergeben sich aus der nachfolgenden Beschreibung, in der Ausführungsformen der Erfindung anhand von schematischen Zeichnungen beispielhaft erläutert werden, ohne dadurch die Erfindung zu beschränken. Dabei zeigen
- Figur 1: eine schematische Darstellung einer erfindungsgemäßen Energieumwandlungsvorrichtung mit vertikaler Rotordrehachse an einer Felswand;
- Figur 2a: eine Seitenansicht einer Energieumwandlungsvorrichtung mit einer Fangeinrichtung mit rechteckigem Querschnitt;
- Figur 2b: eine Vorderansicht der Energieumwandlungsvorrichtung gemäß Figur 2a;
- Figur 2c: eine Draufsicht der Energieumwandlungsvorrichtung gemäß Figur 2a;
- Figur 3a: eine Seitenansicht einer Energieumwandlungsvorrichtung mit einer Fangeinrichtung mit rundem Querschnitt;
- Figur 3b: eine Vorderansicht der Energieumwandlungsvorrichtung gemäß Figur 3a;
- Figur 3c: eine Draufsicht der Energieumwandlungsvorrichtung gemäß Figur 3a;
- Figuren 4 bis 11: verschiedene schematische Darstellungen erfindungsgemäßer Energieumwandlungsvorrichtungen mit unterschiedlichen Fangeinrichtungen;

Zur Vereinfachung der Lesbarkeit werden in der nachfolgenden Beschreibung bevorzugter Ausführungsformen der Erfindung für dieselben oder ähnliche Komponenten in verschiedenen Ausführungsformen dieselben oder ähnliche Bezugszeichen verwendet.

Die Energieumwandlungsvorrichtung 1 ist erfindungsgemäß dazu ausgelegt und eingerichtet, Wasserenergie in elektrische Energie umzuwandeln. Eine erfindungsgemäße Energieumwandlungsvorrichtung 1 umfasst als Hauptbestandteile einen Rotor 3 und ein Strömungsgehäuse 5, in dem der Rotor 3 untergebracht ist. Der Rotor 3 hat eine Rotordrehachse D, deren Ausrichtung in Bezug beispielsweise auf die Horizontale H und die Vertikale V festgelegt ist. Zu diesem Zweck kann der Rotor 3 beispielsweise durch ein Traggestell 7 gehalten sein. Das Strömungsgehäuse 5 ist mit einem Rotormantel 53 ausgestattet, der den Rotor 3 radial zur Rotordrehachse D umgibt.

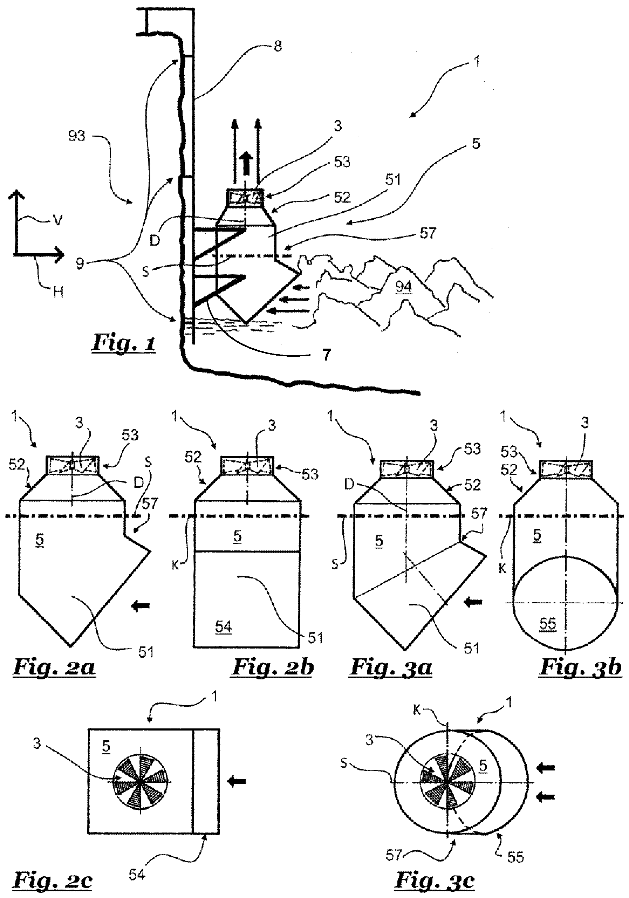

Fig. 1 zeigt eine Energieumwandlungsvorrichtung 1 an einer Felswand 93. Die Felswand 93 erstreckt sich im Wesentlichen in Vertikalrichtung V. An der Felswand 93 ist ein Fundament 9 vorgesehen, an dem ein Traggestell 7 der Energieumwandlungsvorrichtung 1 verankert ist. Der Rotor 3 ist bei der in Fig. 1 dargestellten Ausführungsform mit einer in Vertikalrichtung V orientierten Rotordrehachse D festgelegt. Der Rotor 3 ist dazu ausgelegt, von Wasser angeströmt und angetrieben zu werden, das sich in Vertikalrichtung V aufwärts durch den Rotormantel 53 bewegt. Zum Zuführen der Wellen 94 zum Rotor 3 und zum Umlenken der Bewegung des Wassers in eine im Wesentlichen vertikal aufwärts gerichtete Bewegungsrichtung ist das Strömungsgehäuse 5 im Vorlauf des Rotormantels 53 ausgelegt und eingerichtet. Das Strömungsgehäuse 5 ist hierzu mit einer Fangeinrichtung 51 ausgestattet. Die Fangeinrichtung 51 setzt sich zusammen aus einem Krümmer 57 und einer trichterförmigen Querschnittsverjüngung 52. Die Fangeinrichtung 51, d. h. der Krümmer 57 und die Querschnittsverjüngung 52 wie auch der Rotormantel 53 sind starr und relativ zu einander ortsfest am Traggestell 7 befestigt. Das Strömungsgehäuse 5 kann beispielsweise wie das nachfolgend in Bezug auf die Figuren 2a bis 2c beschriebene ausgestaltet sein. Im Nachlauf des Rotormantels 53 kann eine nicht näher dargestellte Rückhalteeinrichtung, beispielsweise eine Rückhalteklappe, vorgesehen sein, die es zulässt, dass Wasser sich in der Vertikalrichtung V aufwärts durch das Strömungsgehäuse 5 bewegt und die verhindert, dass Wasser in Vertikalrichtung V abwärts durch das Strömungsgehäuse 5 fließen kann.

Das Traggestell 7 ist mit einer Schienenlagerung 8 ausgestattet. Dank der Schienenlagerung 8 ist die Energieumwandlungsvorrichtung 1 in Vertikalrichtung V verfahrbar. Abhängig von der gegenwärtig vorherrschenden Tidenhöhe kann mithilfe der Lagerung 8 die Stellung der Energieumwandlungsvorrichtung 1 und insbesondere die Rotorstellung eingestellt werden, um die Energie der Wellen 94 optimal zu erfassen, beispielsweise abhängig von der Tidenhöhe und/oder dem vorherrschenden Wellengang. Bei einer exemplarischen Ausführungsform ist die Rotororientierung, d.h. die Ausrichtung der Rotordrehachse D, konstant entsprechend der Vertikalrichtung V festgelegt. Alternativ kann die Energieumwandlungsvorrichtung um eine erste horizontale Schwenkachse S und/oder eine zweite horizontale Kippachse (in Richtung der Zeichnungsebene) schwenkbar sein, um auf eine vorherrschende Strömungsrichtung einstellbar zu sein.

Die Figuren 2a bis 2c zeigen verschiedene Ansichten des Strömungsgehäuses 5 einer Energieumwandlungsvorrichtung 1. Der Rotormantel 53 hat einen kreisförmigen Querschnitt. Der Krümmer 57 der Fangeinrichtung 51 hat einen quadratischen Querschnitt. Die Querschnittsverjüngung 52 ist trichterartig und hat eingangs denselben quadratischen Querschnitt wie der Krümmer 57 und am Ausgang denselben kreisförmigen Querschnitt wie der Rotormantel 53. Der rechteckige Querschnitt des Krümmers 57 ist ausgangsseitig (in Richtung des Rotors 3) in Relation zum eingangsseitigen (den Wellen 94 zugewandten) rechteckigen Querschnitt 54 des Krümmers 57 um etwa 60° versetzt. Der Krümmer 57 bewirkt eine Umlenkung der Bewegungsrichtung des Wassers ausgehend von der horizontalen Richtung H der Wellen 94 in eine im Wesentlichen vertikale, aufwärtsgerichtete Richtung V um etwa 90°.

Die Figuren 3a bis 3c zeigen eine alternative Ausgestaltung eines Strömungsgehäuses 5 für eine Energieumwandlungsvorrichtung 1. Von dem zuvor in Bezug auf die Figuren 2a bis 2c beschriebenen Strömungsgehäuse 5 unterscheidet sich das in den Figuren 3a bis 3c dargestellte Strömungsgehäuse 5 im Wesentlichen nur durch den kontinuierlich kreisförmigen Querschnitt 55. Im Übrigen wird auf die vorigen Ausführungsformen verwiesen.

Wie in den Figuren 2a bis 3c dargestellt, kann eine Schwenkachse S und eine dazu orthogonale Kippachse K vorgesehen sein, relativ zu der das Strömungsgehäuse 5 schwenkbeweglich ist. Eine nicht näher dargestellten Stellvorrichtung, die beispielsweise mechanisch, pneumatisch, hydraulisch oder manuell betätigt sein kann, kann eine Ausrichtung des Strömungsgehäuses 5 in Bezug auf die Kipp- und/oder Schwenkachse K, S bewirken.

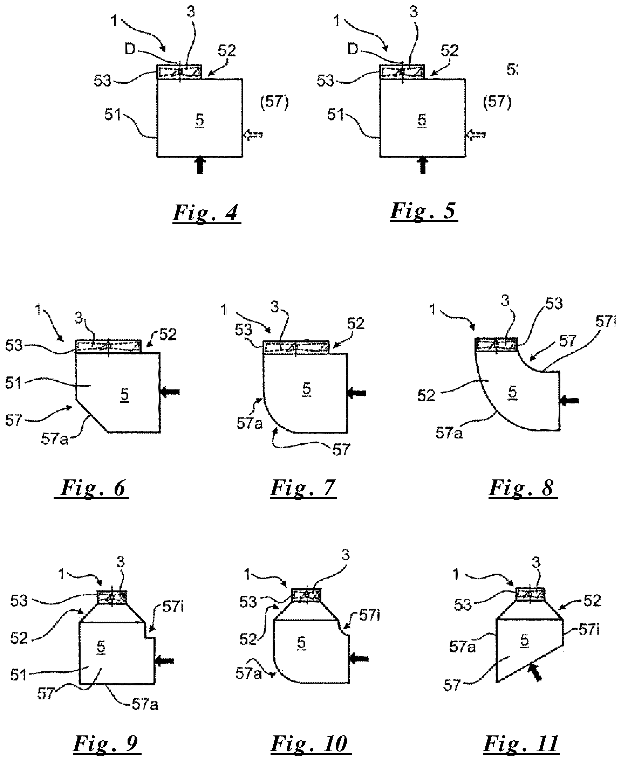

Die Figuren 4 bis 11 zeigen eine Vielzahl verschiedener Konfigurationen für Strömungsgehäuse 5 verschiedener erfindungsgemäße Energieumwandlungsvorrichtungen 1. Abhängig von den lokalen Gegebenheiten kann die ideale Strömungsgehäuse-Konfiguration ausgewählt werden. Die Auswahl der Strömungsgehäuse-Konfiguration kann auch unter ökonomischen Gesichtspunkten, beispielsweise im Hinblick auf eine einfache und damit kostengünstige Herstellung und/oder Montage gewählt sein. Die Querschnittsform ist nicht im Detail dargestellt. Es sei klar, dass das Strömungsgehäuse 5 verschiedenartig geformt sein kann, beispielsweise mit einem zumindest abschnittsweise oder vollständig runden, insbesondere kreisförmigen oder elliptischen, Querschnitt, oder mit einem zumindest abschnittsweise oder vollständig eckigen, insbesondere rechteckigen, besonders bevorzugt quadratischen, oder polygonalen, Querschnitt geformt sein kann. Die Wasser-Eingangsrichtung ist mit einem dicken, schwarzen Pfeil gekennzeichnet.

Fig. 4 zeigt eine Energieumwandlungsvorrichtung 1 mit einer Fangeinrichtung 51, die eine größere Querschnittsbreite aufweist als die Diagonale des Rotormantels 53. Der stufenartige Übergang zwischen der Fangeinrichtung 51 und dem Rotormantel 53 bildet eine Querschnittsverjüngung 52, die eine Zwangsdurchströmung des Rotors 3 mit erhöhter Strömungsgeschwindigkeit bewirkt. Dies gilt gleichermaßen für die Ausführungsform gemäß Fig. 5. Die Energieumwandlungsvorrichtungen 1 in den Figuren 4 und 5 unterscheiden sich in im Wesentlichen nur dadurch, dass bei der Ausführungsform gemäß Fig. 5 der Rotormantel 53 koaxial und mittig am Ausgang der Fangeinrichtung 51 des Strömungsgehäuses 5 angeordnet ist, wohingegen der Rotormantel 53 an dem Ausgang des in Fig. 4 dargestellten Strömungsgehäuses 5 achsenparallel, jedoch unsymmetrisch versetzt angeordnet ist. Bei manchen Ausführungsformen ist eine alternative Ausgestaltung mit einer anderen Wasser-Eingangsrichtung entsprechend eines strichlierten Pfeils dargestellt. Bei diesen alternativen Ausführungsformen realisiert das Strömungsgehäuse 5 auch einen Krümmer 57.

Die Energieumwandlungsvorrichtungen 1, welche in den Figuren 6 bis 11 dargestellt sind, haben Strömungsgehäuse 5 mit verschiedenen Krümmern 57 und unterschiedlichen Querschnittsverengungen 52. Die Krümmer 57 setzen sich jeweils aus einer inneren Krümmerwand 57i und einer äußeren Krümmerwand 57a zusammen. Bei den Energieumwandlungsvorrichtungen 1 gemäß der Figuren 8 und 10 sind sowohl die innere Krümmerwand 57i als auch die äußere Krümmerwand 57a bogenförmigen kontinuierlich gekrümmt geformt.

Die Querschnittsverjüngung 52 der Energieumwandlungsvorrichtung 1 gemäß Fig. 8 ist in Funktionsunion durch den Krümmer 57 gebildet. Bei der Energieumwandlungsvorrichtung 1 gemäß Fig. 9 wie auch bei denen gemäß Fig. 10 und Fig. 11 ist eine trichterförmige Querschnittsverjüngung 52 zwischen dem Krümmer 57 und dem Rotormantel 53 angeordnet.

Die Energieumwandlungsvorrichtung 1 gemäß Fig. 7 hat eine geradlinige innere Krümmerwand 57i und eine kontinuierliche, viertelkreisbogenförmig verlaufende äußere Krümmerwand 57a. Die Energieumwandlungsvorrichtungen 1 gemäß der Figuren 6 und 9 weisen je eine äußere Krümmerwand 57a auf, die mit Winkeln geformt ist. Bei den Energieumwandlungsvorrichtungen 1 der Figuren 6 und 7 ist die Querschnittsverjüngung 52 wie zuvor Bezug auf Fig. 4 beschrieben gebildet.

Der Krümmer 57 gemäß Fig. 11 ist dadurch gebildet, dass die innere Krümmerwand 57i kürzer ist als die äußere Krümmerwand 57a. Die innere Krümmerwand 57i und die äußere Krümmerwand 57a sind im Wesentlichen raumparallel zu einander ausgerichtet, durch die unterschiedlichen Längen ergibt sich jedoch eine andere Ausrichtung des Eingangsquerschnitts im Vergleich zum Ausgangsquerschnitt.

Es sei klar, dass anstelle der oben in Bezug auf die Figur 1 beschriebenen Strömungsgehäuse-Konfigurationen eine andere Strömungsgehäuse-Konfiguration einsetzbar ist, insbesondere eine gemäß einer der Figuren 4 bis 11.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Energieumwandlungsvorrichtung
- 3: Rotor
- 5: Strömungsgehäuse
- 7: Traggestell
- 8: Schienenlagerung
- 9: Fundament
- 51: Fangeinrichtung
- 52: Querschnittsverjüngung
- 53: Rotormantel
- 54: eckiger Querschnitt
- 55: runder Querschnitt
- 56: Rückhalteklappe
- 57: Krümmer
- 57i: innere Krümmerwand
- 57a: äußere Krümmerwand
- 58: Segel
- 71: Schwimmkörper
- 73: Staumauer
- 91: Wasserfall
- 93: Felswand
- 94: Wellen

- D: Drehachse
- H: Horizontalrichtung
- K: Kippachse
- V: Vertikalrichtung
- S: Schwenkachse

## Patentansprüche

1. Energieumwandlungsvorrichtung (1) zum Umwandeln von Wasserenergie in elektrische Energie, umfassend:
mindestens einen Rotor (3) mit einer Rotordrehachse (D), deren Ausrichtung festgelegt ist,
ein Strömungsgehäuse (5), das einen Rotormantel (53) umfasst, der den Rotor (3) radial zu der Rotordrehachse (D) umgibt, wobei
das Strömungsgehäuse (5) eine dem Rotormantel (53) vorgelagerte Fangeinrichtung (51) umfasst, die dazu ausgelegt und eingerichtet ist, eine Wasserbewegung zum Rotor (3) zu führen,
wobei an dem Rotormantel (53) zugewandten Ende der Fangeinrichtung (51) mindestens eine Querschnittsverjüngung (52) angeordnet ist und
wobei die Fangeinrichtung (51) mindestens einen Krümmer (57) umfasst,
wobei der Krümmer der Querschnittsverjüngung in Bezug auf die Bewegungsrichtung des Wassers vorgelagert ist,
ferner umfassend ein Traggestell (7), wobei die Ausrichtung der Rotordrehachse (D) durch das Traggestell (7) festgelegt ist,
ferner umfassend eine Lagerung, an der das Traggestell (7), an dem der Rotor (3) festgelegt ist, quer und/oder parallel zur Richtung der Rotordrehachse (D) beweglich gehalten ist, um die Ausrichtung der Rotordrehachse auf einem vorherrschenden Wasserstand anzupassen.

2. Energieumwandlungsvorrichtung (1) nach Anspruch 1, **dadurch gekennzeichnet, dass**
die Fangeinrichtung (51) sich kanalartig, insbesondere zylinder- oder quaderförmig, von dem Rotormantel (53) ausdehnt.

3. Energieumwandlungsvorrichtung (1) nach Anspruch 1 oder 2, **dadurch gekennzeichnet, dass**
die Fangeinrichtung (51) einen runden, insbesondere kreisförmigen oder elliptischen, Querschnitt (55) oder eckigen, insbesondere vieleckigen, vorzugsweise quadratischen, Querschnitt (54) aufweist.

4. Energieumwandlungsvorrichtung (1) nach einem der vorstehenden Ansprüche, **dadurch gekennzeichnet, dass**
die Querschnittverjüngung (52) eine trichterförmige, vorzugsweise kontinuierliche oder stufenförmige, Querschnittsverjüngung (52) darstellt.

5. Energieumwandlungsvorrichtung (1) nach einem der vorstehenden Ansprüche, **dadurch gekennzeichnet, dass**
der Krümmer (57) eine innere Krümmerwand (57i) und eine äußere Krümmerwand (57a) aufweist, wobei die innere Krümmerwand (57i) kürzer ist die äußere Krümmerwand (57a), wobei insbesondere die innere Krümmerwand (57i) einen abgerundeten oder kantigen Verlauf aufweist und/oder wobei insbesondere die äußere Krümmerwand (57a) einen abgerundeten oder kantigen Verlauf aufweist.

6. Energieumwandlungsvorrichtung (1) nach einem der vorstehenden Ansprüche wobei die Lagerung eine Schienenlagerung (8) ist.

7. Energieumwandlungsvorrichtung (1) nach einem der vorstehenden Ansprüche wobei das Traggestell (7), an dem der Rotor (3) festgelegt ist orthogonal zur Richtung der Rotordrehachse (D) beweglich gehalten ist.

8. Energieumwandlungsvorrichtung (1) nach einem der vorstehenden Ansprüche, **dadurch gekennzeichnet, dass**
der Rotor (3) in Vertikalrichtung (V) und/oder in Horizontalrichtung (H), vorzugsweise quer oder parallel zur Rotordrehachse (D), insbesondere zwischen mindestens zwei Rotorstellungen mit parallelen Drehachsen-Ausrichtungen und/oder relativ zum Traggestell (7), verlagerbar ist.

9. Energieumwandlungsvorrichtung (1) nach einem der vorstehenden Ansprüche, **dadurch gekennzeichnet, dass**
der Rotor (3) quer zur Rotordrehachse (D), schwenkbeweglich ist, vorzugsweise um eine insbesondere vertikale Schwenkachse (S) und/oder eine insbesondere horizontale Kippachse (K), insbesondere zwischen mindestens zwei Rotororientierungen, insbesondere relativ zum Traggestell (7), beispielsweise um etwa 45° oder etwa 80°.

10. Energieumwandlungsvorrichtung (1) nach einem der Ansprüche 8 oder 9,
**gekennzeichnet durch**
wenigstens eine, insbesondere mechanische, pneumatische, hydraulische und/oder manuelle, Stellvorrichtung, die zum Einstellen der Rotorstellung und/oder der Rotororientierung ausgelegt und eingerichtet ist.

11. Energieumwandlungsvorrichtung (1) nach einem der vorstehenden Ansprüche, **dadurch gekennzeichnet, dass**
die Rotordrehachse (D) in Horizontalrichtung (H) ausgerichtet ist oder
dass die Rotordrehachse in Vertikalrichtung (V) ausgerichtet ist.

12. Energieumwandlungsvorrichtung (1) nach Anspruch 11, **dadurch gekennzeichnet,**
**dass** die Energieumwandlungsvorrichtung (1) zum Umwandeln von Wasserenergie aus einem Wasserfall (91) oder Wellen (94) an einer Felswand (93) ausgelegt und eingerichtet ist.

13. Energieumwandlungsvorrichtung (1) nach einem der vorstehenden Ansprüche,
**dadurch gekennzeichnet, dass**
das Strömungsgehäuse (5) wenigstens ein Segel (58) umfasst, das zumindest abschnittsweise eine Oberfläche des Strömungsgehäuses (5), insbesondere der Fangeinrichtung (51), vorzugsweise einer, insbesondere trichterförmigen, Querschnittsverjüngung (52) und/oder des Rotormantels (53) bildet.

14. Energieumwandlungsvorrichtung (1) nach einem der Ansprüche 2 bis 13, ferner umfassend
einen Schwimmkörper (71), an dem das Traggestell (7), an dem der Rotor (3) festgelegt ist, befestigt ist.

15. Energieumwandlungsvorrichtung (1) nach einem der Ansprüche 2 bis 13, **dadurch gekennzeichnet, dass**
das Traggestell (7), an dem der Rotor (3) festgelegt ist, an einem Fundament (9) am Grund befestigbar ist.

16. Energieumwandlungsvorrichtung (1) nach einem der Ansprüche 2 bis 13, **dadurch gekennzeichnet, dass**
das Traggestell (7), an dem der Rotor (3) festgelegt ist, an einer Staumauer (73) befestigbar ist.

17. Energieumwandlungsvorrichtung (1) nach einem der vorstehenden Ansprüche, **gekennzeichnet durch**
eine Vielzahl hintereinander angeordneter Rotoren (3), insbesondere mit koaxialen Rotordrehachsen (D) und/oder verbunden mit der gleichen Rotorwelle.

18. Energieumwandlungsvorrichtung (1) nach einem der vorstehenden Ansprüche, **gekennzeichnet durch**
wenigstens eine, insbesondere hinter dem Rotor (3) angeordnete, Rückhalteeinrichtung, wie eine Rückhalteklappe (56), die dazu ausgelegt und eingerichtet ist, eine Strömung von Wasser in einer ersten Richtung durch das Strömungsgehäuse (5) zu gestatten, und in einer zweiten, zu der ersten Richtung entgegengesetzten zweiten Richtung, zu verhindern.

19. Energieumwandlungsanordnung **gekennzeichnet durch** mehrere Energieumwandlungsvorrichtungen (1) nach einem der vorstehenden Ansprüche.

20. Energieumwandlungsanordnung nach Anspruch 19, **dadurch gekennzeichnet, dass** die mehreren Energieumwandlungsvorrichtungen (1), insbesondere drehachsenparallel, hintereinander angeordnet sind und/oder dass die mehreren Energieumwandlungsvorrichtungen (1), insbesondere drehachsenparallel, übereinander und/oder nebeneinander angeordnet sind.

## Claims

1. An energy conversion device (1) for converting water energy into electric energy, comprising:
at least one rotor (3) having a rotor rotational axis (D), the alignment of which is fixed,
a flow housing (5) which comprises a rotor mantle (53) which surrounds the rotor (3) radially to the rotor rotational axis (D), wherein
the flow housing (5) comprises a catching apparatus (51) upstream of the rotor mantle (53), which is adapted and arranged to guide a movement of water to the rotor (3),
wherein at least one cross-sectional tapering (52) is arranged at the end of the catching apparatus (51) facing the rotor mantle (53),
wherein the catching apparatus (51) comprises at least one manifold (57),
wherein the manifold is located upstream of the cross-sectional tapering with respect to the direction of movement of the water,
further comprising a supporting frame (7), wherein the alignment of the rotor rotational axis (D) is fixed by the supporting frame (7),
further comprising a mounting to which a supporting frame (7), to which the rotor (3) is fixed, is movably held transversely and/or parallel to the direction of the rotor rotational axis (D) in order to adjust the alignment of the rotor axis of rotation to a prevailing water level.

2. The energy conversion device (1) according to Claim 2, **characterized in that** the catching apparatus (51) extends channel-like, in particular in a cylindrical or cuboidal manner, from the rotor mantle (53).

3. The energy conversion device (1) according to Claim 1 or 2, **characterized in that** the catching apparatus (51) has a round, in particular circular or elliptical, cross section (55) or angular, in particular polygonal, preferably square, cross section (54).

4. The energy conversion device (1) according to any one of the preceding Claims,
**characterized in that**
the cross-sectional tapering (52) is a funnel-shaped, preferably continual or stepped, cross-sectional tapering (52).

5. The energy conversion device (1) according to any one of the preceding Claims,
**characterized in that**
the manifold (57) has an inner manifold wall (57i) and an outer manifold wall (57a), wherein the inner manifold wall (57i) is shorter than the outer manifold wall (57a), wherein in particular the inner manifold wall (57i) is rounded or angular and/or wherein in particular the outer manifold wall (57a) is rounded or angular.

6. The energy conversion device (1) according to any one of the preceding claims, wherein the mounting is a rail mounting (8).

7. The energy conversion device (1) according to any one of the preceding claims,
wherein
the supporting frame (7), to which the rotor (3) is fixed, is movably held orthogonally to the direction of the rotor rotational axis (D).

8. The energy conversion device (1) according to any one of the preceding claims,
**characterized in that**
the rotor (3) can be displaced in the vertical direction (V) and/or in the horizontal direction (H), preferably transversely or parallel to the rotor rotational axis (D), in particular between at least two rotor positions with parallel rotational axis alignments and/or relative to the supporting frame (7).

9. The energy conversion device (1) according to any one of the preceding claims,
**characterized in that**
the rotor (3) is movable in a swiveling manner transversely to the rotor rotational axis (D), preferably about an in particular vertical swiveling axis (S) and/or an in particular horizontal tilting axis (K), in particular between at least two rotor orientations, in particular relative to the supporting frame (7), for example by approximately 45° or approximately 80°.

10. The energy conversion device (1) according to any one of Claims 8 or 9,
**characterized by**
at least one, in particular mechanical, pneumatic, hydraulic and/or manual, actuating device which is adapted and arranged to adjust the rotor position and/or the rotor orientation.

11. The energy conversion device (1) according to any one of the preceding claims,
**characterized in that**
the rotor rotational axis (D) is aligned in horizontal direction (H) or the rotor rotational axis is aligned in vertical direction (V).

12. The energy conversion device (1) according to Claim 11, **characterized in that** the energy conversion device (1) is adapted and arranged to convert water energy from a waterfall (91) or waves (94) on a rock face (93).

13. The energy conversion device (1) according to any one of the preceding claims,
**characterized in that**
the flow housing (5) comprises at least one sail (58) which, at least in sections, forms a surface of the flow housing (5), in particular of the catching apparatus (51), preferably of a, in particular funnel-shaped, cross-sectional tapering (52) and/or of the rotor mantle (53).

14. The energy conversion device (1) according to any one of the claims 2 to 13, further comprising
a float (71) to which a supporting frame (7), to which the rotor (3) is fixed, is fastened.

15. The energy conversion device (1) according to any one of Claims 2 to 13, **characterized in that**
a supporting frame (7), to which the rotor (3) is fixed, can be fastened to a foundation (9) on the bottom.

16. The energy conversion device (1) according to any one of Claims 2 to 13, **characterized in that**
a supporting frame (7), to which the rotor (3) is fixed, is fastened to a dam wall (73).

17. The energy conversion device (1) according to any one of the preceding claims, **characterized by**
a plurality of rotors (3) arranged behind one another, in particular having coaxial rotor rotational axes (D) and/or connected to the same rotor shaft.

18. The energy conversion device (1) according to any one of the preceding claims, **characterized by**
at least one retaining apparatus, arranged in particular behind the rotor (3), such as a retaining flap (56) which is adapted and arranged to allow a flow of water in a first direction through the flow housing (5), and to prevent a flow of water in a second direction opposite to the first direction.

19. An energy conversion arrangement **characterized by** several energy conversion devices (1) according to any one of the preceding claims.

20. The energy conversion device according to Claim 19, **characterized in that** the several energy conversion devices (1) are arranged behind one another, in particular parallel to the rotational axis, and/ or the several energy conversion devices (1) are arranged above one another and/or next to one another, in particular parallel to the rotational axis.

## Revendications

1. Dispositif de conversion d'énergie (1) destiné à convertir de l'énergie hydraulique en énergie électrique, comprenant :
au moins un rotor (3) doté d'un axe de rotation de rotor (D), l'alignement de celui-ci étant fixée,
un boîtier d'écoulement (5) qui comprend un manteau de rotor (53) qui entoure le rotor (3) radialement par rapport à l'axe de rotation de rotor (D),
le boîtier d'écoulement (5) comprenant un dispositif de capture (51) disposé en amont de l'manteau de rotor (53), qui est conçu et agencé pour guider un mouvement d'eau vers le rotor (3),
au moins un rétrécissement de section transversale (52) étant disposé à l'extrémité du dispositif de capture (51) tournée vers l'manteau de rotor (53), et
le dispositif de capture (51) comprenant au moins un coude (57),
le coude étant disposé en amont du rétrécissement de section transversale par rapport à la direction de mouvement de l'eau,
comprenant en outre un cadre de support (7), l'alignement de l'axe de rotation de rotor (D) étant fixé par le cadre de support (7),
comprenant en outre un palier sur lequel le cadre de support (7), sur lequel le rotor (3) est fixé, est maintenu de manière mobile transversalement et/ou parallèlement à la direction de l'axe de rotation de rotor (D), pour adapter l'alignement de l'axe de rotation du rotor sur un niveau d'eau prédominant.

2. Dispositif de conversion d'énergie (1) selon la revendication 1, **caractérisé en ce que**
le dispositif de capture (51) s'étend en forme de canal, en particulier en forme de cylindre ou de cube, à partir de l'manteau de rotor (53).

3. Dispositif de conversion d'énergie (1) selon la revendication 1 ou 2, **caractérisé en ce que**
le dispositif de capture (51) présente une section transversale (55) ronde, en particulier circulaire ou elliptique, ou une section transversale (54) angulaire, en particulier polygonale, de préférence carrée.

4. Dispositif de conversion d'énergie (1) selon l'une quelconque des revendications précédentes, **caractérisé en ce que**
le rétrécissement de section transversale (52) représente un rétrécissement de section transversale (52) en forme d'entonnoir, de préférence continu ou en forme de gradin.

5. Dispositif de conversion d'énergie (1) selon l'une quelconque des revendications précédentes, **caractérisé en ce que**
le coude (57) présente une paroi de coude intérieure (57i) et une paroi de coude extérieure (57a), la paroi de coude intérieure (57i) étant plus courte que la paroi de coude extérieure (57a), où en particulier la paroi de coude intérieure (57i) présentant un tracé arrondi ou anguleux et/ou où en particulier la paroi de coude extérieure (57a) présentant un tracé arrondi ou anguleux.

6. Dispositif de conversion d'énergie (1) selon l'une quelconque des revendications précédentes,
le palier étant un support sur rail (8).

7. Dispositif de conversion d'énergie (1) selon l'une quelconque des revendications précédentes,
le cadre de support (7), sur lequel le rotor (3) est fixé, étant maintenu de manière mobile orthogonalement à la direction de l'axe de rotation de rotor (D).

8. Dispositif de conversion d'énergie (1) selon l'une quelconque des revendications précédentes, **caractérisé en ce que**
le rotor (3) peut être déplacé dans la direction verticale (V) et/ou dans la direction horizontale (H), de préférence transversalement ou parallèlement à l'axe de rotation de rotor (D), en particulier entre au moins deux positions de rotor avec des alignements d'axe de rotation parallèles et/ou par rapport au cadre de support (7).

9. Dispositif de conversion d'énergie (1) selon l'une quelconque des revendications précédentes, **caractérisé en ce que**
le rotor (3) peut pivoter transversalement à l'axe de rotation de rotor (D), de préférence autour d'un axe de pivotement (S) en particulier vertical et/ou d'un axe de basculement (K) en particulier horizontal, en particulier entre au moins deux orientations de rotor, en particulier par rapport au cadre de support (7), par exemple d'environ 45° ou d'environ 80°.

10. Dispositif de conversion d'énergie (1) selon l'une quelconque des revendications 8 ou 9, **caractérisé par**
au moins un dispositif de réglage, en particulier mécanique, pneumatique, hydraulique et/ou manuel, qui est conçu et agencé pour régler la position de rotor et/ou l'orientation de rotor.

11. Dispositif de conversion d'énergie (1) selon l'une quelconque des revendications précédentes, **caractérisé en ce que**
l'axe de rotation de rotor (D) est aligné dans la direction horizontale (H) ou
**en ce que** l'axe de rotation de rotor est aligné dans la direction verticale (V).

12. Dispositif de conversion d'énergie (1) selon la revendication 11, **caractérisé en ce que** le dispositif de conversion d'énergie (1) est conçu et agencé pour convertir de l'énergie hydraulique à partir d'une chute d'eau (91) ou de vague (94) sur une paroi rocheuse (93).

13. Dispositif de conversion d'énergie (1) selon l'une quelconque des revendications précédentes, **caractérisé en ce que**
le boîtier d'écoulement (5) comprend au moins une voile (58) qui forme au moins en partie une surface du boîtier d'écoulement (5), en particulier du dispositif de capture (51), de préférence un rétrécissement de section transversale (52), en particulier en forme d'entonnoir, et/ou de l'manteau de rotor (53).

14. Dispositif de conversion d'énergie (1) selon l'une quelconque des revendications 2 à 13, comprenant en outre
un corps flottant (71), sur lequel le cadre de support (7), sur lequel le rotor (3) est fixé, est fixé.

15. Dispositif de conversion d'énergie (1) selon l'une quelconque des revendications 2 à 13, **caractérisé en ce que**
le cadre de support (7), sur lequel le rotor (3) est fixé, peut être fixé sur une fondation (9) au sol.

16. Dispositif de conversion d'énergie (1) selon l'une quelconque des revendications 2 à 13, **caractérisé en ce que**
le cadre de support (7), sur lequel le rotor (3) est fixé, peut être fixé sur un mur de barrage (73).

17. Dispositif de conversion d'énergie (1) selon l'une quelconque des revendications précédentes, **caractérisé par**
une pluralité de rotors (3) disposés les uns derrière les autres, en particulier dotés d'axes de rotation de rotor (D) coaxiaux et/ou reliés au même arbre de rotor.

18. Dispositif de conversion d'énergie (1) selon l'une quelconque des revendications précédentes, **caractérisé par**
au moins un dispositif de retenue, en particulier disposé derrière le rotor (3), tel qu'un clapet de retenue (56), qui est conçu et agencé pour permettre un écoulement d'eau dans une première direction à travers le boîtier d'écoulement (5) et dans une deuxième direction opposée à la première direction.

19. Agencement de conversion d'énergie **caractérisé par** plusieurs dispositifs de conversion d'énergie (1) selon l'une quelconque des revendications précédentes.

20. Agencement de conversion d'énergie selon la revendication 19, **caractérisé en ce que** les plusieurs dispositifs de conversion d'énergie (1) sont disposés les uns derrière les autres, en particulier parallèlement à l'axe de rotation, et/ou **en ce que** les plusieurs dispositifs de conversion d'énergie (1) sont disposés les uns au-dessus des autres et/ou les uns à côté des autres, en particulier parallèlement à l'axe de rotation.
